# EUROPÄISCHE PATENTSCHRIFT

(11) **EP 1 157 781 B1**
(45) Veröffentlichungstag und Bekanntmachung des Hinweises auf die Patenterteilung: **04.10.2006**
(21) Anmeldenummer: 01112003.7
(22) Anmeldetag: 22.05.2001
(51) Int. Cl.: B23Q 11/00

(54) **Vorrichtung zum Gewichtsausgleich**
Weight balancing device
Dispositif d'équilibrage du poids

(30) Priorität: 23.05.2000 DE 10025355
(43) Veröffentlichungstag der Anmeldung: 28.11.2001
(73) Patentinhaber: Innotec Forschungs- und Entwicklungs-GmbH, 95615 Marktredwitz (DE)
(72) Erfinder: Hofmann, Klaus, 85567 Pienzenau (DE)
(74) Vertreter: Amann, Thomas

(56) Entgegenhaltungen:
- DE-A- 4 108 223
- DE-A- 4 425 575
- DE-U- 8 401 953
- GB-A- 767 539
- US-A- 1 577 975
- US-A- 1 795 262
- US-A- 4 003 552
- US-A- 4 943 020

## Beschreibung

Die Erfindung betrifft eine Vorrichtung gemäß dem Oberbegriff des Anspruchs 1, die zum Gewichtsausgleich bewegbarer Maschinenteile einer Werkzeugmaschine dient. Eine solche Vorrichtung ist aus der GB 767 539 bekannt.

Im Werkzeugmaschinenbereich wird das Gewicht der vertikal bewegten Maschinenteile zur Verminderung der Antriebsleistung beim Anheben sowie zur Vergrößerung der Beschleunigung vielfach durch Gegengewichte ausgeglichen, die über Rollenketten oder Seile mit den zu bewegenden Maschinenteilen, wie z.B. Fräseinheiten, Konsolen oder Querträgern, verbunden sind. Besonders bei Werkzeugmaschinen in kompakter Bauweise ist jedoch oftmals der Platz für derartige Gegengewichte und die zusätzlich erforderlichen Führungen nicht vorhanden.

Es wird daher auch bereits ein hydraulischer oder hydropneumatischer Gewichtsausgleich eingesetzt, bei dem das Gewicht eines vertikal verfahrbaren Maschinenteils durch einen oder mehrere Druckmittelzylinder abgefangen wird. Allerdings sind bei dieser Art von Gewichtsausgleich entsprechende Einrichtungen zur Druckmittelversorgung und Steuerglieder zur Einstellung und Aufrechterhaltung des Druckes in den Druckmittelzylindern erforderlich.

Aufgabe der Erfindung ist es, eine Vorrichtung der eingangs genannten Art zu schaffen, die einfach und kompakt aufgebaut ist und auch einen Gewichtsausgleich ohne aufwendige Druckmittelversorgungen und Steuereinrichtungen ermöglicht.

Diese Aufgabe wird erfindungsgemäß durch die Merkmale des Anspruchs 1 gelöst. Die Vorrichtung enthält mehrere Spiralfedern, deren eines Ende mit einem feststehenden Bauteil und deren anderes Ende mit dem bewegbaren Maschinenteil zur Erzeugung einer der Gewichtskraft des bewegbaren Maschinenteils entgegenwirkenden Gegenkraft verbunden ist.

Durch die Vorrichtung gemäß Anspruch 1 kann besonders die Gewichtskraft vertikal oder schräg bewegbarer Maschinenteile mit einfachen Mittel ganz oder teilweise ausgeglichen werden. Dadurch kann die für ein Anheben der Maschinenteile benötigte Antriebsleistung verringert werden. Der Vorschubantrieb wird beim Anheben auch größerer Massen geringer belastet und es sind größere Beschleunigungen erreichbar.

So enthält die Vorrichtung mehrere parallelgeschaltete Spiralfedern die zwischen dem zu bewegenden Maschinenteil und einem feststehenden Bauteil angeordnet sind. Durch mehrere Spiralfedern kann die Federkennlinie optimal an die bestehenden Anforderungen angepaßt werden. Darüber hinaus ist eine Sicherheit für den Fall vorhanden, daß an einer der Spiralfedern ein Bruch oder dgl. auftritt.

Das innere Ende des Spiralfedern ist an einer Achse und das äußere Ende an einem zur Achse konzentrischen Gehäuse befestigt. Die Achse ist feststehend angeordnet und das Gehäuse ist drehbar ausgeführt.

Das Gehäuse ist mit dem zu bewegenden Maschinenteil über einen Zahnriemen verbunden, der große Belastungen aufnehmen kann und sich bei Anheben des Maschinenteils auf den zweckmäßigerweise trommelförmigen Mittelteil des Gehäuses aufwickelt.

Die nebeneinander angeordneten Spiralfedern sind durch Distanzscheiben voneinander getrennt. Dadurch kann eine unerwünschte Reibung zwischen den einzelnen Federn verhindert werden.

Zur Vorspannung der Spiralfedern ist an der Achse ein entsprechender Verstellflansch vorgesehen, der über Radialbohrungen gedreht und in einer gewünschten Winkelstellung über stirnseitige Befestigungsschrauben oder dgl. an einer Winkelkonsole oder einem anderen feststehenden Maschinenteil befestigt werden kann.

Weitere Besonderheiten und Vorzüge der Erfindung ergeben sich aus der folgenden Beschreibung eines vorteilhaften Ausführungsbeispiels anhand der Zeichnung. Es zeigen:
- Fig. 1: eine stark vereinfachte, schematische Darstellung einer herkömmlichen Vorrichtung zum Gewichtsausgleich;
- Fig. 2: einen Längsschnitt eines Ausführungsbeispiels einer erfindungsgemäßen Vorrichtung zum Gewichtsausgleich;
- Fig. 3: einen Querschnitt entlang der Linie I-I von Fig. 2;
- Fig. 4: die in den Fig. 2 und 3 dargestellte Vorrichtung mit einem Zahnriemen und seitlichen Winkelstützen in einer Perspektivansicht; und
- Fig. 5: die in Fig. 4 gezeigte Vorrichtung an einem zum Teil dargestellten Spindelstock eines Vertikal-Bearbeitungszentrums.

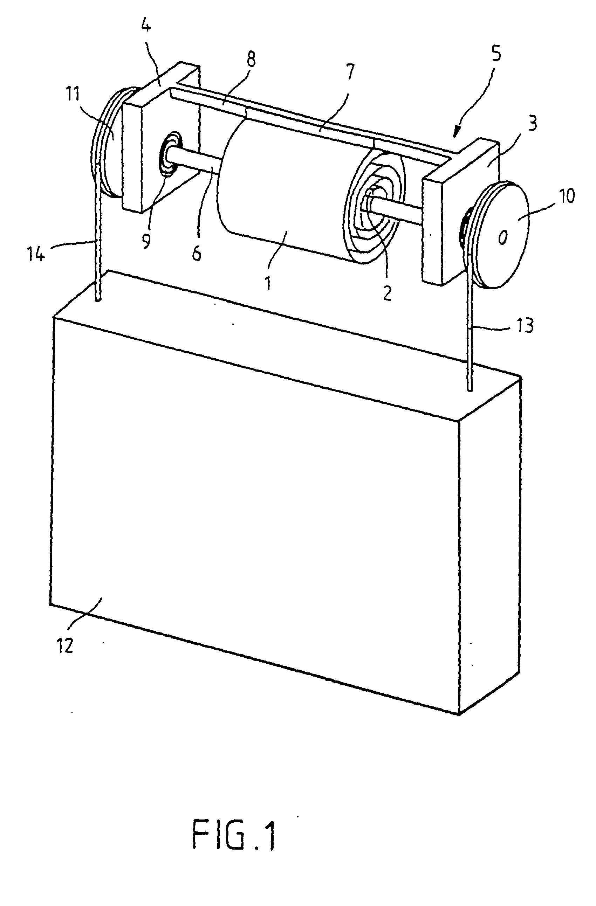

Die in Fig. 1 schematisch dargestellte Vorrichtung zum Gewichtsausgleich eines bewegbaren Maschinenteils einer Werkzeugmaschine, die nicht unter den von dem Anspruch begehrten Schutz fällt, enthält eine Spiralfeder 1 aus einem spiralförmig aufgewickelten Federstahlband, deren inneres Ende 2 an einer in zwei Seitenteilen 3 und 4 eines ortsfesten Stützelements 5 drehbar gelagerten Achse 6 und deren äußeres Ende 7 an einem festen Verbindungssteg 8 zwischen den beiden Seitenteilen 3 und 4 des Stützelements 5 befestigt sind. Auf den beiden über die Seitenteile 3 und 4 seitlich vorstehenden Enden der in den beiden Seitenteilen 3 und 4 über entsprechende Lager 9 drehbar gelagerten Achse 6 ist jeweils eine Rolle 10 bzw. 11 drehfest montiert. An den Rollen 10 und 11 sind die oberen Endteile zweier an einem Maschinenteil 12 fixierten Seile 13 und 14 befestigt und zum Auf- und Abrollen beim Anheben bzw. Absenken des Maschinenteils 12 geführt. Bei entsprechender Vorspannung der Spiralfeder 1 kann so die Gewichtskraft des zu bewegenden Maschinenteils 12 über die Federkraft ganz oder teilweise ausgeglichen werden. Dadurch kann die für das Anheben des Maschinenteils 12 benötigte Antriebsleistung eines Vorschubantriebs deutlich verringert werden und es reichen kleiner dimensionierte Antriebsmotoren für den Vorschubantrieb aus.

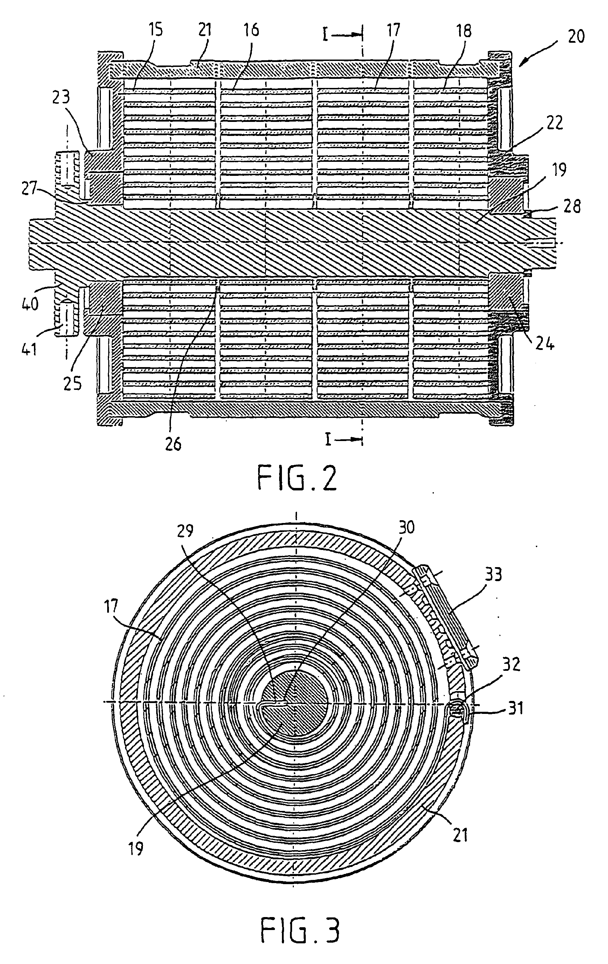

In den Fig. 2 bis 5 ist ein konkretes Ausführungsbeispiel einer erfindungsgemäßen Vorrichtung zum Gewichtsausgleich an einem vertikal verfahrbaren Spindelstock eines Vertikal-Bearbeitungszentrums gezeigt. Bei dieser Ausführung sind vier aus einem Federstahlband mit Rechteckquerschnitt bestehende Spiralfedern 15 bis 18 um eine Achse 19 innerhalb eines Gehäuses 20 angeordnet. Das Gehäuse 20 enthält gemäß Fig. 2 eine zur Achse 19 konzentrische Trommel 21 und zwei endseitige Lagerdeckel 22 und 23, durch die das Gehäuse 20 über Lager 24 und 25 auf der Achse 19 drehbar gelagert ist. Die einzelnen Spiralfedern 15 bis 18 sind zur Verhinderung einer Reibung oder sonstigen gegenseitigen Beeinflussung über Distanzscheiben 26 voneinander getrennt. Durch einen Absatz 27 an der einen Seite der Achse 19 und eine an der anderen Seite der Achse 19 befestigbare Endscheibe 28 ist das Gehäuse 20 mit den Lagern 24 und 25 in Axialrichtung fixiert.

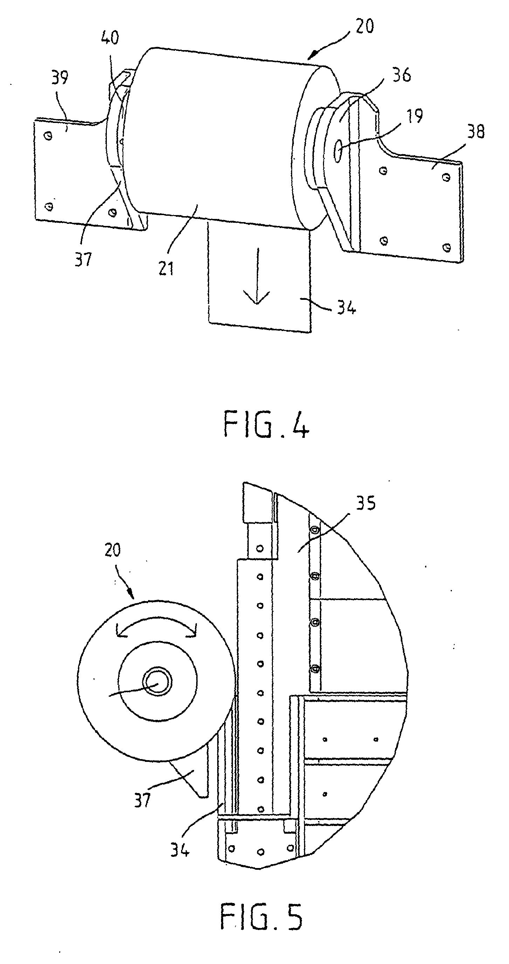

Wie aus Fig. 3 hervorgeht, ist das innere Ende 29 jeder Feder 15 bis 18 über einen seitlichen Schlitz 30 an der Achse 19 befestigt. Das äußere Ende 31 der Federn 15 bis 18 ist zur Befestigung an der Trommel 21 um einen Stab 32 umgebogen, der sich in einer entsprechenden Ausnehmung in der Trommel 21 in Axialrichtung der Achse 19 erstreckt. An der Außenseite der Trommel 21 ist außerdem eine Klemmleiste 33 zur Befestigung eines in Fig. 4 dargestellten Zahnriemens 34 angeschraubt, über den die Trommel 21 des drehbaren Gehäuses 20 mit einem in Fig. 5 nur zum Teil dargestellten und durch einen nicht gezeigten Vorschubantrieb in der Vertikalachse verfahrbaren Spindelstock 35 verbunden ist.

Die Achse 19 ist gemäß der Fig. 4 und 5 in nach vorne vorstehenden Stützteilen 36 und 37 zweier Winkelstützen 38 und 39 verdrehgesichert gehaltert. Über die beiden Winkelstützen 38 und 39 ist die Vorrichtung zum Gewichtsausgleich an einem feststehenden Teil der Werkzeugmaschine befestigbar. An eine Ende der Achse 19 ist ein besonders in Fig. 2 erkennbarer Flansch 40 mit Radialbohrungen 41 zur Einstellung einer Vorspannung der Spiralfedern 15 bis 18 vorgesehen. Über nicht dargestellte seitliche Befestigungsschrauben ist die Achse 19 zur Beibehaltung einer eingestellten Vorspannung z.B. gegenüber dem Stützteil 37 in einer bestimmten Winkelstellung fixierbar.

Durch die vorstehend beschriebene und der Zeichnung dargestellte Ausführung einer erfindungsgemäßen Vorrichtung kann das Gewicht z.B. einer in der Vertikalachse verfahrbaren Bearbeitungseinheit ausgeglichen werden. Die Erfindung ist jedoch nicht auf dieses Ausführungsbeispiel beschränkt, sondern kann auch zum Gewichtsausgleich anderer vertikal oder schräg verfahrbarer Maschinenteile eingesetzt werden.

## Patentansprüche

1. Vorrichtung zum Gewichtsausgleich von vertikal oder schräg bewegbaren Bauteilen einer Werkzeugmaschine mit
- einem Federelement (15 bis 18) zur Erzeugung einer der Gewichtskraft des bewegbaren Bauteils (12) entgegenwirkenden Gegenkraft, das mehrere parallel nebeneinander in einer drehbar gelagerten Gehäusetrommel (20, 21) angeordnete Spiralfedern (15 bis 18) enthält, deren innere Enden (29) an einer fixierten Achse (19) und deren äußere Enden (31) an der zur Achse (19) konzentrischen Gehäusetrommel (20, 21) befestigt sind,
- zwischen den Spiralfedern (15 bis 18) angeordneten Distanzscheiben (26),
- einem flexiblen Zugstrang (34), der kinematisch mit der Gehäusetrommel (20, 21) und mit dem bewegbaren Bauteil (12) verbunden ist und
- einer Einrichtung (40, 41) zur Vorspannung der Spiralfedem (15 bis 18), die einen an der Achse (19) ausgebildeten Verstellflansch (40) enthält, der in vorgegebenen Winkelstellungen fixierbar ist
**dadurch gekennzeichnet, dass**
die Gehäusetrommel (20, 21) mit dem bewegbaren Bauteil (35) über einen den flexiblen Zugstrang bildenden Zahnriemen (34) verbunden ist, der an der Außenseite der Trommel (21) mittels einer Klemmleiste (33) befestigt ist und
die äußeren Enden (31) der Spiralfedern (15 bis 18) zur Festigung an der Trommel (21) um einen Stab (32) umgebogen sind, der sich in einer entsprechenden Ausnehmung in der Trommel (21) in Axialrichtung der Achse (19) erstreckt.

## Claims

1. A weight balancing device for balancing the weight of vertically or obliquely movable components of a machine tool, said device comprising
- a spring member (15 to 18) for generating a counterforce opposing the weight force of said movable component (12), said spring member including a plurality of spiral springs (15 to 28) arranged in parallel juxtaposed manner in a rotatably supported housing drum (20, 21), with the inner ends (29) of said springs being secured to a fixed axle (19) and the outer ends (31) thereof being secured to the housing drum (20, 21) concentric with said axle (19),
- spacer discs (26) arranged between said spiral springs (15 to 18),
- a flexible tension string (34) kinematically coupled to said housing drum (20, 21) and to said movable component (12), and
- a means (40, 41) for biasing said spiral springs (15 to 18), said means including an adjustment flange (40) formed on said axle (19) and adapted to be fixed in predetermined angular positions,
**characterized in that**
said housing drum (20, 21) is connected to said movable component (35) via a toothed belt (34) constituting said flexible tension string and attached to the outside of said drum (21) by means of a clamping strip (33), and
**in that** the outer ends (31) of said spiral springs (15 to 18), for attachment to said drum (21), are bent around a rod (32) extending in axial direction of said axle (19) in a corresponding recess in said drum (21).

## Revendications

1. Dispositif d'équilibrage du poids de pièces, mobiles dans le sens vertical ou en oblique, d'une machine-outil, comportant
- un élément à élastique (15 à 18), qui est destiné à générer une contre-force s'opposant au poids de la pièce mobile (12) et qui contient plusieurs ressorts en spirale (15 à 18) disposés parallèlement les uns à côté des autres dans un tambour formant boîtier (20, 21) monté rotatif, dont les extrémités intérieures (29) sont fixées à un axe (19) immobile et dont les extrémités extérieures (31) sont fixées sur le tambour de boîtier (20, 21) concentrique à l'axe (19),
- des disques-entretoises (26) disposés entre les ressorts en spirale (15 à 18),
- un moyen de traction (34) flexible, qui est relié cinématiquement au tambour de boîtier (20, 21) et à la pièce mobile (12), et
- un dispositif (40, 41) pour la précontrainte des ressorts en spirale (15 à 18), qui comporte une bride de réglage (40), qui est réalisée sur l'axe (19) et qui peut être fixée dans des positions angulaires prédéfinies,
**caractérisé en ce que**
le tambour de boîtier (20, 21) est relié à la pièce mobile (35) par l'intermédiaire d'une courroie dentée (34), formant le moyen de traction flexible et fixée contre la face extérieure du tambour (21) au moyen d'une baguette de serrage (33), et
les extrémités extérieures (31) des ressorts en spirale (15 à 18), en vue d'être fixées au tambour (21), sont courbées autour d'une barre (32) qui s'étend dans le sens axial de l'axe (19) dans un évidement correspondant dans le tambour (21).
